(19) Europäisches Patentamt

European Patent Office

Office européen des brevets

(11) **EP 0 739 931 A1**

(12) ## DEMANDE DE BREVET EUROPEEN

(43) Date de publication:
30.10.1996 Bulletin 1996/44

(51) Int Cl.⁶: **C08J 7/12**, C08J 5/12

(21) Numéro de dépôt: **96400806.4**

(22) Date de dépôt: **16.04.1996**

(84) Etats contractants désignés:
**CH DE ES FR GB IT LI NL**

(30) Priorité: **25.04.1995 FR 9504913**

(71) Demandeur: **ELF ATOCHEM S.A.**
**92800 Puteaux (FR)**

(72) Inventeurs:
- **Betremieux, Isabelle**
  **27270 Beaumontel (FR)**

- **Germain, Jean-Yves**
  **26300 Bourg-de-Peage (FR)**
- **Tron, Loic**
  **92300 Levallois-Perret (FR)**

(74) Mandataire: **Neel, Henry**
**Elf Atochem S.A.,**
**Dept. Propriété Industrielle,**
**La Défense 10,**
**Cedex 42**
**92091 Paris La Défense (FR)**

(54) **Procédé de surmoulage d'un thermoplastique sur un caoutchouc**

(57) L'invention concerne un procédé de surmoulage (i) d'un thermoplastique choisi parmi les polyuréthannes et les polymères à base de polyamide sur (ii) un caoutchouc dans lequel on halogène le caoutchouc en surface puis on surmoule le thermoplastique par compression ou injection.

Ce procédé est utile pour fabriquer des semelles de chaussures de sport.

## Description

La présente invention concerne un procédé de surmoulage d'un thermoplastique sur un caoutchouc, le thermoplastique étant choisi parmi les polyuréthannes et les polymères à base de polyamide.

Le but de l'invention est d'obtenir un matériau comprenant le dit thermoplastique associé à un caoutchouc. Ce matériau, ou cette structure, est utile par exemple pour fabriquer des chaussures de sport ayant une semelle en polyamide élastomère sur laquelle on veut fixer des crampons en caoutchouc ou un talon ou des pièces en caoutchouc pour prévenir l'usure de la semelle.

En effet, les propriétés mécaniques demandées aux chaussures de sport sont telles que la semelle tout en caoutchouc ne convient pas, de plus, elle serait trop lourde. Cependant, le caoutchouc est peu coûteux et très résistant à l'usure.

Selon la présente invention, la partie en caoutchouc subit une halogénation en surface, puis on vient surmouler par compression la pièce en thermoplastique. On peut aussi injecter le thermoplastique, le caoutchouc qui a été halogéné, étant disposé préalablement dans le fond du moule.

La partie en caoutchouc ne peut être séparée de la partie en thermoplastique que par rupture du caoutchouc.

L'art antérieur a déjà décrit des matériaux de ce type. EP 550 346 décrit le surmoulage de caoutchouc fonctionnalisé sur des polymères thermoplastiques à blocs polyamides et blocs polyéther. Par exemple, on dispose une feuille ou une pièce du dit polymère thermoplastique dans le fond d'un moule, puis après avoir refermé le moule, on injecte du caoutchouc X-NBR (copolymère d'acrylonitrile et de butadiène portant des fonctions acide carboxylique) avec ses agents de vulcanisation et ses charges. On chauffe pour provoquer la vulcanisation du caoutchouc.

On obtient un assemblage caoutchouc / polymère thermoplastique qu'il est impossible de séparer ; on ne peut qu'obtenir la rupture du caoutchouc. Ce procédé n'est utilisable qu'avec du caoutchouc fonctionnalisé et est plutôt réservé aux matériaux ayant une partie en polymère thermoplastique de forme simple.

DE 1 942 462 décrit des caoutchoucs styrène-butadiène qu'on halogène par du brome et du chlore puis avec un adhésif polyuréthanne, on les colle sur du PVC. Selon la présente invention, il n'est pas nécessaire d'utiliser un adhésif.

JP 0 5043724 (KOKAI) décrit du caoutchouc styrène / butadiène vulcanisé qu'on traite en surface par de l'acide chlorhydrique.

Les pièces ainsi halogénées sont trempées dans une solution d'un copolymère de nylon dans le méthanol puis séchées. On répète deux fois l'opération pour obtenir une couche de 40 $\mu$m. On peut ainsi revêtir des bottes en caoutchouc avec du nylon. Ce procédé est réservé au revêtement de pièces en caoutchouc et ne permet pas d'assembler une pièce en caoutchouc avec une pièce en polyamide ou en polyuréthanne. De plus, il nécessite un solvant, un séchage et la récupération du solvant pendant le séchage. De plus, tous les polyamides et les polyuréthannes ne sont pas solubles dans le méthanol.

La présente invention concerne un procédé de surmoulage (i) d'un thermoplastique choisi parmi les polyuréthannes et les polymères à base de polyamide sur (ii) un caoutchouc dans lequel on halogène le caoutchouc en surface puis on surmoule le thermoplastique par compression ou injection.

On entend par caoutchouc au sens de la présente invention la signification habituelle, c'est-à-dire les produits, qui une fois vulcanisés, présentent une déformation rémanente à la compression (DRC) à 100° C inférieure à 50 %, généralement entre 50 et 40 % et de préférence inférieure à 30 %.

A titre d'exemple de caoutchoucs halogénables, on peut citer ceux à base de copolymères styrène / butadiène (SBR), de butadiène (BR), d'isoprène naturel (NR), d'isoprène (IR), de copolymères éthylène / propylène / diène (EPDM), de copolymères acrylonitrile / butadiène (NBR), de (méth)acrylate d'alkyle (ACM).

On ajoute à ces polymères ou copolymères de base un système de vulcanisation, des plastifiants, des charges telles que du noir de carbone, de la silice, du kaolin, de l'argile, du talc, de la craie, etc. Ces charges peuvent être traitées en surface par des silanes, des polyéthylène glycols ou toute autre produit de couplage. Tous ces produits sont connus en eux-mêmes, ainsi que la technique de vulcanisation.

Bien qu'on puisse utiliser tout halogène, il est avantageux de se limiter au chlore et au brome pour des raisons de coût et surtout des facilités de mise en oeuvre. En pratique, on utilise le chlore puisqu'il est plus réactif et réduit ainsi le temps d'halogénation.

L'halogénation peut être menée de plusieurs façons : en milieu organique en présence d'acide trichloroisocyanurique mais de préférence en milieu aqueux en présence d'acide chlorydrique et d'hypochlorite de sodium. Le vulcanisat subit simultanément une attaque à l'acide, une oxydation et une halogénation, ce qui a pour effet de polariser sa surface.

Cette technique a été décrite pour le caoutchouc naturel (à base de polyisoprène) dans AQUEOUS CHLORINATION OF NATURAL RUBBER American Chemical Society (Rubber Division) 129th meeting, NEW YORK, Avril 1986.

La demanderesse a découvert qu'on pouvait l'appliquer aux caoutchoucs cités précédemment.

On ne sortirait pas du cadre de l'invention si le caoutchouc contenait des groupes fonctionnels acide ou anhydride d'acide carboxylique.

Les polyuréthannes qu'on utilise à titre de thermoplastique peuvent être des polyesteruréthannes ou des polyétheruréthannes, ils ont aussi un catactère élastomérique.

Les polyesteruréthannes contiennent des motifs provenant de la réaction de polyisocyanates avec des polyesterdiols du type polybutylène-1,4 adipate et du glycol ou du butane diol-1,4 ou un diol allongeur de chaîne. Les polyétheruréthanes contiennent des motifs provenant de la réaction de polyisocyanates avec des polyétherdiols de type polytétraméthylène glycol et du glycol ou du butane diol-1,4 ou un diol allongeur de chaîne.

Les polymères à base de polyamide peuvent être des polyamides, des mélanges de polyamides et de polyoléfines, des polymères à blocs polyamides et blocs polyéther ou des mélanges de deux ou plusieurs de ces polymères.

On entend par polyamide les produits de condensation :

- d'un ou plusieurs aminoacides, tels les acides aminocaproïques, amino-7-heptanoïque, amino-11-undécanoique et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;

ou des mélanges de tous ces monomères ce qui conduit à des copolyamides.

On peut utiliser des mélanges de polyamide. On utilise avantageusement le PA-12 et le PA-11.

Quant aux mélanges de polyamide et de polyoléfines, ils comprennent les polyamides précédents. Ces mélanges se présentent sous forme d'une matrice en polyamide avec des nodules de polyoléfine.

On entend par polyoléfines des polymères comprenant des motifs oléfines tels que par exemple des motifs éthylène, propylène, butène-1, etc.

A titre d'exemple, on peut citer :

- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.

- les copolymères blocs styrène / éthylène-butène / styrène (SEBS) éventuellement maléisés.

On peut utiliser des mélanges de deux ou plusieurs de ces polyoléfines.
On utilise avantageusement :

- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, pour faciliter la formation de la matrice de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.
On peut citer par exemple :

- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène (méth)acrylate d'alkyle anhydride maléique, l'anhydride maléique étant greffé ou copolymérisé,
- les copolymères éthylène / acétate de vinyle / anhydride maléique, l'anhydride maléique étant greffé ou copolymérisé.

- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères polyamides ayant une seule extrémité amine.

Ces produits sont décrits dans les brevets FR 2 291 225 et EP 342 066 dont le contenu est incorporé dans la présente demande.

La quantité de polyamide formant la matrice peut être comprise entre 55 et 95 parties pour 5 à 45 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères par mélange de polyamide, de polyoléfine et éventuellement de compatibilisant selon les techniques usuelles de mélange à l'état fondu (bi vis, Buss, monovis).

Avantageusement, la matrice est en polyamide 6 (PA-6) ou 66 (PA-6,6) dans laquelle sont dispersés, soit des nodules d'un mélange de polyéthylène basse densité et de copolymère d'éthylène de (méth)acrylate d'alkyl et d'anhydride maléique ou de méthacrylate de glycidyle, soit des nodules de polypropylène.

De tels produits sont décrits dans les brevets US 5 070 145 et EP 564 338.

Dans le cas du polypropylène, on ajoute un comptabilisant qui est avantageusement un copolymère éthylène / propylène majoritaire en nombre de motifs propylène, greffé par l'anhydride maléique, puis condensé ensuite avec des oligomères mono aminés de caprolactame.

Ces mélanges de polyamide et de polyoléfine de la couche intérieure peuvent être plastifiés et éventuellement contenir des charges telles que du noir de carbone, etc.

De tels mélanges de polyamide et de polyoléfine sont décrits dans le brevet US 5 342 886.

Les polymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent, par exemple, de la condensation d'acides alpha-oméga aminocarboxyliques de lactames ou de diacides carboxyliques et diamines en présence d'un diacide carboxylique limiteur de chaîne.

La masse molaire en nombre $\overline{M}_n$ des séquences polyamides est comprise entre 300 et 15 000 et de préférence entre 600 et 5 000. La masse $\overline{M}_n$ des séquences polyéther est comprise entre 100 et 6 000 et de préférence entre 200 et 3 000.

Les blocs polyéthers peuvent dériver, par exemple, du polyéthylèneglycol, du polyoxypropylèneglycol ou du polyoxytetraméthylèneglycol. Soit, ils sont utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique. Par simplification, on qualifie les blocs polyéthers de "blocs ou motifs polyoxyalkyléneglycol....".

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple, des duretés shore D pouvant être comprises entre 20 et 75 et avantageusement entre 30 et 70 et une viscosité intrinsèque entre 0,8 et 2,5 mesurée dans le métacrésol à 250° C pour une concentration initiale de 0,8 g/100 ml.

Ces polymères à blocs polyamides et polyéthers sont décrits dans les brevets US 4 331 786, US 4 115 475, US 4 195 015, US 4 839 441, US 4 864 014, US 4 230 838 et US 4 332 920.

Avantageusement, le polymère à blocs polyamides et blocs polyéthers est tel que le polyamide est le constituant majoritaire en poids, c'est-à-dire que la quantité de polyamide qui est sous forme de blocs et celle qui est éventuellement répartie de façon statistique dans la chaîne représente plus de 50 % en poids du polymère à blocs polyamide et blocs polyéther. Avantageusement, la quantité de polyamide et la quantité de polyéther sont dans le rapport (polyamide/polyéther) 1/1 3/1.

La partie en thermoplastique peut être déjà une pièce formée, il suffit alors de sa surmouler par compression sur le caoutchouc halogéné. On peut aussi procéder par injection, la partie en caoutchouc halogéné est disposée dans un moule puis après fermeture du moule, on injecte le thermoplastique. Le matériau de l'invention est formé d'une partie, en caoutchouc et d'une partie en thermoplastique qui sont attachées l'une à l'autre sans adhésif ; c'est-à-dire que l'halogénation du caoutchouc et les propriétés du thermoplastique sont suffisantes pour éviter l'usage d'un adhésif.

Le matériau présente une rupture cohésive dans le caoutchouc.

On rappelle qu'une rupture est dite cohésive quand, lorsque l'on sépare les deux parties, la rupture ne se fait pas à l'interface de ceux-ci. Par contre, lorsque la rupture se fait à cet interface, elle est dite adhésive.

**_Exemples_**:

Des caoutchoucs SBR, NBR et EPDM ont été formulés sur mélangeur interne avec des charges, des huiles paraffiniques. Le système de vulcanisation a ensuite été introduit sur cylindres. Ces formulations ont été vulcanisées dans des moules sous forme de plaques.

Les plaques sont plongées dans une solution d'hypochlorite de sodium et d'acide chlorhydrique. En sortie du bain, elles sont éventuellement basifiées puis rincées à l'eau distillée et séchées. A partir de ces plaques, l'adhésion de différents thermoplastiques été étudiée et est décrite dans les exemples ci-dessous.

Pour chaque type de thermoplastique, les essais de surmoulage ont été réalisés au moyens des techniques d'injection et de compression.

Tableau 1 :

| principales caractéristiques des thermoplastiques figurant dans les exemples. | | | | |
|---|---|---|---|---|
| **Référence** | **Type** | **Producteur** | **Point de fusion** | **Dureté shore A** |
| Pebax 1 | Polyamide bloc éther | Elf Atochem | 200°C | 55 |
| Pebax 2 | Polyamide bloc éther | Elf Atochem | 160°C | 55 |
| Elastollan C 85 | Polyester - polyuréthanne | BASF | | 87 |
| Elastollan C 90 | Polyester - polyuréthanne | BASF | | 92 |
| Elastollan 1185 | Polyéther - polyuréthanne | BASF | | 87 |
| Elastollan 1190 | Polyéther - polyuréthanne | BASF | | 92 |

La force de pelage est mesurée 24 heures après l'essai selon la norme NFT 46008. Le pelage est amorcé en ménageant une zone sans adhésion entre le caoutchouc halogéné et le thermoplastique à l'aide d'un ruban adhésif d'aluminium placé sur le caoutchouc avant le surmoulage du thermoplastique.

Dans ce tableau, PEBAX 1 désigne un polymère à blocs polyamide 6 de masse $\overline{M}_n$ 1300 et blocs polytétraméthylène glycol de masse $\overline{M}_n$ 650.

La viscosité intrinsèque de ce PEBAX est 1,55 mesurée à 0,5 g/100 g dans le métacrésol à 25° C.

PEBAX 2 désigne un polymère à blocs polyamide 12 de masse $\overline{M}_n$ 2 000 et blocs polytétraméthylène glycol de masse $\overline{M}_n$ 1 000.

La viscosité de ce PEBAX 2 est 1,65 mesurée à 0,5g/100 g dans le métacrésol à 25° C.

**A - SBR chloré en surface.**

**_Exemple 1:_**

Les thermoplastiques présentés dans le tableau 1 ont été surmoulés par compression sur du SBR vulcanisé et chloré en surface selon le procédé suivant :

a - Préparation de l'ébauche de caoutchouc : l'ébauche est découpée à l'aide d'un emporte-pièce, aux dimensions de 100x40 mm.

b - Préparation de l'ébauche de thermoplastique : Des films d'environ 1 mm d'épaisseur ont été obtenus par compression moulage et découpés à l'emporte-pièce aux dimensions de 100x40 mm.

c - Dans le moule de compression, le thermoplastique est porté à 180°c pendant 5 minutes ou 220°C pendant 3 minutes sans pression à la surface du caoutchouc vulcanisé et chloré. Une légère pression est ensuite appliquée pendant 2 minutes pour assurer la mise en forme de l'ébauche. Le composite est ensuite refroidi sous circulation d'eau. La force de pelage est mesurée 24 heures après l'essai.

Tableau 2 :

| surmoulage par compression sur le SBR chloré. | | | |
|---|---|---|---|
| Référence thermoplastique | Conditions opératoires | Force de pelage DaN/cm | Observation de rupture |
| Pebax 2 | 180°C, 5 minutes | 9 | Allongement du Pebax |
| Pebax 1 | 180°C, 5 minutes | 12 | R |
| Pebax 1 | 220°C, 3 minutes | 6.8 | Allongement Pebax |
| Elastollan C 90 | 180°C, 5 minutes | 4.5 | RC |
| Elastollan C90 | 220°C, 3 minutes | 7.5 | R/RC |
| Ellastollan 1190 | 180°C, 5 minutes | 9.3 | R |

Dans le tableau 2 et les tableaux suivants :
R désigne la rupture dans le caoutchouc.
RC désigne la rupture à l'interface thermoplastique/caoutchouc.
Allongement signifie que l'allongement à la rupture du thermoplastique est atteint avant le décollage de l'assemblage.

**_Exemple 2_** :

Une presse à injecter les thermoplastiques est équipée d'un moule de dimension 100x100x3 mm.
Une ébauche de SBR est découpée aux dimensions du moule 100x100 mm et placée dans l'insert. Le thermoplastique est ensuite injecté à sa température de plastification pour être surmoulé sur le SBR. La force de pelage est mesurée 24 heures après l'essai.

Tableau 3 :

| surmoulage par injection sur le SBR chloré. | | | |
|---|---|---|---|
| Référence thermoplastique | Température d'injection | Force de pelage DaN/cm | Observation de rupture |
| Pebax 1 | 250-270°C | 9.3 | R |
| Pebax 2 | 240-260°C | 10.5 | R |
| Elastollan C 85 A | | 9 | Allongement Elastollan |
| Elastollan 1185 | 190-210°C | 7.5 | RC |

**B - NBR chloré en surface**.

**_Exemple 3_**:

Dans les mêmes conditions que dans l'exemple 1, les différents thermoplastiques sont surmoulés par compression sur un NBR vulcanisé et chloré en surface

Tableau 4 :

| surmoulage par compression sur le NBR chloré. | | | |
|---|---|---|---|
| Référence thermoplastique | Conditions opératoires | Force de pelage DaN/cm | Observation de rupture |
| Pebax 2 | 180°C, 5 minutes | 7 | RC |
| Pebax 2 | 220°C, 3 minutes | 8 | Allongement Pebax |
| Pebax 1 | 180°C, 5 minutes | 6.5 | RC |
| Pebax 1 | 220°C, 3 minutes | 8 | Allongement Pebax |
| Elastollan C 90 | 180°C, 5 minutes | 4.5 | RC |
| Elastollan 1190 | 180°C, 5 minutes | 6.4 | RC |

*Exemple 4* :

Dans les mêmes conditions que dans l'exemple 2, les différents thermoplastiques sont surmoulés par injection sur le NBR vulcanisé et chloré.

Tableau 5 :

| surmoulage par injection sur le NBR chloré. | | | |
|---|---|---|---|
| Référence thermoplastique | Température d'injection | Force de pelage DaN/cm | Observation de rupture |
| Pebax 5513 | 250-270°C | 7.8 | R |
| Pebax 5533 | 240-260°C | 5.8 | RC |
| Elastollan C 85 A | | 6.5 | Allongement Elastollan |
| Elastollan 1185 | 190-210°C | 7 | RC |

**C- EPDM chloré en surface**.

*Exemple 5*

Dans les mêmes conditions que dans l'exemple 1, différents thermoplastiques ont été surmoulés par compression sur de l'EPDM vulcanisé et chloré en surface.

| Référence thermoplastique | Conditions opératoires | Force de pelage DaN/cm | Observation de rupture |
|---|---|---|---|
| Pebax 1 | 200°C, 2 min 30 | 8,5 | Allongement Pebax |
| Pebax 2 | 220°C, 2 min 30 | 8,5 | Allongement Pebax |

**Revendications**

1. Procédé de surmoulage (i) d'un thermoplastique choisi parmi les polyuréthannes et les polymères à base de polyamide sur (ii) un caoutchouc dans lequel on halogène le caoutchouc en surface puis on surmoule le thermoplastique par compression ou injection.

2. Procédé selon la revendication 1 dans lequel les polyuréthannes sont des polyétheruréthannes ou des polyesteruréthannes et les polymères à base de polyamide sont des polymères à blocs polyamide et blocs polyéther.

3. Procédé selon la revendication 2 dans lequel les polymères à blocs polyamides et blocs polyéther sont des polyétheresteramides.

4. Matériau comprenant une partie en caoutchouc et une partie en thermoplastique choisi parmi les polyuréthannes et les polymères à base de polyamide obtenu par le procédé de l'une quelconque des revendications précédentes.

Office européen
des brevets

## RAPPORT DE RECHERCHE EUROPEENNE

Numero de la demande

EP 96 40 0806

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | AU-A-8 941 501 (PACIFIC DUNLOP LIMITED)<br>* revendication 1, partie (B) *<br>--- | 1,2,4 | C08J7/12<br>C08J5/12 |
| X<br><br><br><br><br>Y | DATABASE WPI<br>Week 8105<br>Derwent Publications Ltd., London, GB;<br>AN 81-06805D<br>XP002010856<br>& JP-A-55 152 040 (BRIDGESTONE TIRE KK)<br>* abrégé *<br>--- | 1,4<br><br><br><br><br>1-4 | |
| Y,D | EP-A-0 550 346 (ELF ATOCHEM S.A.)<br>* revendications 1,2,9,13-19 *<br>* page 4, ligne 5 - ligne 33 *<br>--- | 1-4 | |
| X | EP-A-0 137 114 (THE FIRESTONE TIRE & RUBBER COMPANY)<br>* revendications 1-14 *<br>--- | 1,2,4 | |
| A | EP-A-0 071 587 (INTERMARP (ITALIA) S.P.A.)<br>* revendications 1,4 *<br>----- | 1 | |

**DOMAINES TECHNIQUES RECHERCHES (Int.Cl.6)**

C08J

Le présent rapport a été établi pour toutes les revendications

| Lieu de la recherche | Date d'achèvement de la recherche | Examinateur |
|---|---|---|
| LA HAYE | 14 Août 1996 | Hallemeesch, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)